# EUROPEAN PATENT SPECIFICATION

(11) **EP 4 302 586 B1**
(45) Date of publication and mention of the grant of the patent: **10.12.2025**
(21) Application number: 23183547.1
(22) Date of filing: 05.07.2023
(51) Int. Cl.: A01D 34/00, A01B 59/06, A01B 63/102, A01B 69/04, B62D 49/06, B62D 51/04

(54) **MOVER DEVICE FOR AUTONOMOUSLY MOVING AN AGRICULTURAL IMPLEMENT**
ANTRIEBSEINHEIT ZUM AUTONOMEN BEWEGEN EINES LANDWIRTSCHAFTLICHEN ARBEITSGERÄTS
UNITÉ D'ENTRAÎNEMENT POUR DÉPLACER DE MANIÈRE AUTONOME UN OUTIL AGRICOLE

(30) Priority: 06.07.2022 NL 2032388
(43) Date of publication of application: 10.01.2024
(73) Proprietor: Eco Clipper B.V., 8521 ND Sint Nicolaasga (NL)
(72) Inventor: LEIJENAAR, SYBREN YME, 8521 ND SINT NICOLAASGA (NL)
(74) Representative: Dogio Patents B.V.

(56) References cited:
- EP-A1- 4 239 545
- US-A1- 2015 189 830
- US-A1- 2019 023 171
- US-A1- 2019 200 510
- US-A1- 2020 000 002
- US-A1- 2020 375 093

## Description

The present invention relates to a mover device for autonomously moving an agricultural implement comprising:
a frame having a front side, a rear side, and two lateral sides; at least one motor;
two coaxial driven wheels, wherein each wheel extends at a respective lateral side of the frame and is driven by the motor, for moving the mover device on a surface in a driving direction;
a coupler extending at the rear side of the frame which is arranged for coupling the mover device to the implement.

Such a mover device is disclosed in US 2020/0375093 A1. Another mover device is disclosed in US 11,254,379 B2, and may be used to autonomously drive implements such as a mower device in a field. The mover device may comprise equipment for driving a preprogrammed route and/or for autonomously determining a route in the field.

If it is cumbersome to transport an implement and such a mover device to the field and put it into operation, the time savings are less and sometimes not even worth the effort to have an implement work autonomously. The invention aims at making agricultural implements more easily transportable and autonomously deployable.

To this end, a mover device according to the preamble is characterized in that the mover device comprises:
a three-point hitch attachment device in accordance with any of the international standards ISO 8759, ISO 730 and ISO 11001 extending at the front side of the device for coupling the mover device to a three-point hitch coupler in accordance with any of the international standards ISO 8759, ISO 730 and ISO 11001 of a tractor.

The earlier European patent application EP 4 239 545 A1, which was published after the priority date of the current patent application, and therefore falls under Article 543) EPC, also describes a device in accordance with the preamble of claim 1 comprising a three-point hitch attachment device extending at the front side of the device for coupling the mover device to a three-point hitch coupler of a tractor.

The invention allows for a short-built unit that can be coupled to an implement by means of the standard 3-point coupler or an integrated specific coupling of the implement. The moving device and the implement may be permanently or detachably coupled. The mover device has two driven wheels with which the implement can be pushed or pulled and the mover device can steer due to speed differences between the wheels. In order to easily transport the mover device with the implement, a standard 3-point attachment is provided on the opposite side of the implement to be able to lift and transport the mover and implement as a whole from the ground with the lifting device of an agricultural tractor.

It should be noted that the mover device can normally be used to pull and push an agricultural implement and is normally arrranged to drive in both directions, so that the terms "front side" and "rear side" are chosen arbitrary and do not suggest a fixed driving direction of the mover device.

The three-point hitch attachment device may be provided as a separate adapter device, such as a linkage triangle for rapid coupling and uncoupling of tools (also known as a three-point Accord^{™} A frame linkage) or other three-point adapter device, which may be detachably be connected to the mover device. To that end the mover device is provided with a suitable coupler for connecting the respective Accord^{™} A frame linkage, or other adapter device.

According to a preferred embodiment, the coupler is arranged for coupling the mover device to the implement in such a manner that mutual rotation around at least a vertical axis between the mover device and the implement is substantially not possible.

According to an alternative preferred embodiment, the coupler is arranged for coupling the mover device to the implement in such a manner that mutual rotation around the vertical axis is possible, and that mutual rotation between the mover device and the implement around a horiontal axis perpendicular to the driving direction is substantially not possible.

According to a preferred embodiment, the coupler extending at the rear side of the frame is a three-point hitch coupler in accordance with any of the international standards ISO 8759, ISO 730 and ISO 11001 for coupling the mover device to a three-point hitch attachment device in accordance with any of the international standards ISO 8759, ISO 730 and ISO 11001 on the implement.

According to one aspect, the mover device comprises two motors, wherein each wheel is driven by a respective motor.

Preferably, the mover device comprises a battery or a generator set for powering the motor and/or other electronic devices of the mover device and/or the agricultural implement.

The agricultural implement may be fed by said battery or generator set via a power take-off (PTO) connector mounted on the mover device.

Preferably, the mover device comprises an operating unit arranged to autonomously drive and steer the mover device.

Preferably, the mover device comprises sensors connected to the operating unit to detect obstacles and/or to determine the location of the mover device.

Preferably, the mover device comprises at least one hydraulic conduit between the front side and the rear side of the frame with front and rear hydraulic couplings in accordance with the international standard ISO 5675 arranged to transmit hydraulic power from the tractor to the agricultural implement via the conduit.

The hydraulic connection of the tractor is used to be able to fold the implement and possibly stabilize it for transport. There may be as many hydraulic conduits provided on the mover device as needed for the particular implement. As a result, the unit itself does not need to have a hydraulic pump.

According to one aspect, the mover device comprises a footrest and/or a seat at the front side of the mover device, and a manual control unit, such that an operator is able to manually drive and steer the mover device.

Preferably, the centre of gravity of the mover device is located between the vertical plane through the axis of the wheels and the rear side of the frame.
this is to ensure that the implement is not lifted from the ground by the mover device. The weight may be close to said vertical plane, or closer to the implement coupler, if more pressure on the implement is desired.

According to one aspect, the mover device comprises a parking brake for braking the wheels and a sensor for detecting if the mover device is coupled to a tractor, wherein the operating unit is arranged such that the parking brake is released if the sensor detects that the moving device is coupled to a tractor, and the parking brake is activated if the sensor detects that the moving device is disconnected from a tractor.

According to one aspect, the weight of the mover device is less than 2000 kg, preferably less than 1500 kg.

The weight of the mover device is preferably such that it can be stably lifted together with the agricultural implement by most tractors that are designed for lifting said agricultural elements. The design of the mover device is further preferably such that it can be manipulated by humans, for instance to rotate the device around the wheel axis between a position where it is lying on its side and an upright position. Also means may be provided on the mover device to keep the mover device in an upright position, such as a third wheel or possible fourth wheel which can be folded out at one or both sides when the mover device is not attached to a tractor or an agricultural implement, or balancing equipment as used in two-wheeled self-balancing scooters/hoverboards.

Finally, the present invention relates to method for moving an agricultural implement, wherein a mover device is coupled to a tractor for transporting the moving device and the moving device is coupled to the agricultural implement for autonomously driving the agricultural implement.

The present invention will now be illustrated with reference to the drawing where
Figs. 1A, 1B are a perspective front view and a top view respectively of a first embodiment of a mover device;
Figs. 2A, 2B, 2C are a perspective front view, a rear view and a side view respectively of a second embodiment of a mover device;
Fig. 3 a perspective front view of a second embodiment of a mover device; and
Fig. 4 is a side view of a tractor while transporting the mover device together with an agricultural implement.

According to the figures the mover device comprises a frame 101 in the form of a substantially closed housing, two parallel driven wheels 102 at the lateral sides, an implement coupler 103, 103' at the rear side for attaching and lifting an implement such as a mowing device 150, and a tractor attachment device 104 at the front side for being attached to and lifted by a tractor (not shown).

Inside the housing may be located a motor for driving each wheel 102 in at individually controllable speeds, a battery, power pack or generator, an operating unit for autonomously driving and steering the mover device. The wheels are in principal coaxial, but are coupled to each other such that they are allowed to move vertically in opposite directions, so as to always engage the ground in uneven terrain such as a farm field.

The mover device may further comprise sensors connected to the operating unit to detect obstacles in the field and/or to determine the location of the mover device in the field. The mover device may also comprise a footrest 105 at the front side, and a manual control unit 106, such that an operator is able to manually drive and steer the mover device.

The mover device may furthermore comprise a hydraulic conduit between the front side and the rear side of the frame with front and rear hydraulic couplings, in accordance with the international standard ISO 5675, arranged to transmit hydraulic power from the tractor to the agricultural implement 150 via the conduit.

The tractor attachment device 104 at the front side is a three-point hitch attachment device in accordance with any of the international standards ISO 8759, ISO 730 and ISO 11001, such that the moving device can be engaged by standard three-point hitch couplers of tractors. Such a hitch attachment device may comprise a hitch linkage 141, a central upper hatch pin arrangement 142 and two spaced apart lower hatch pin arrangements 143.

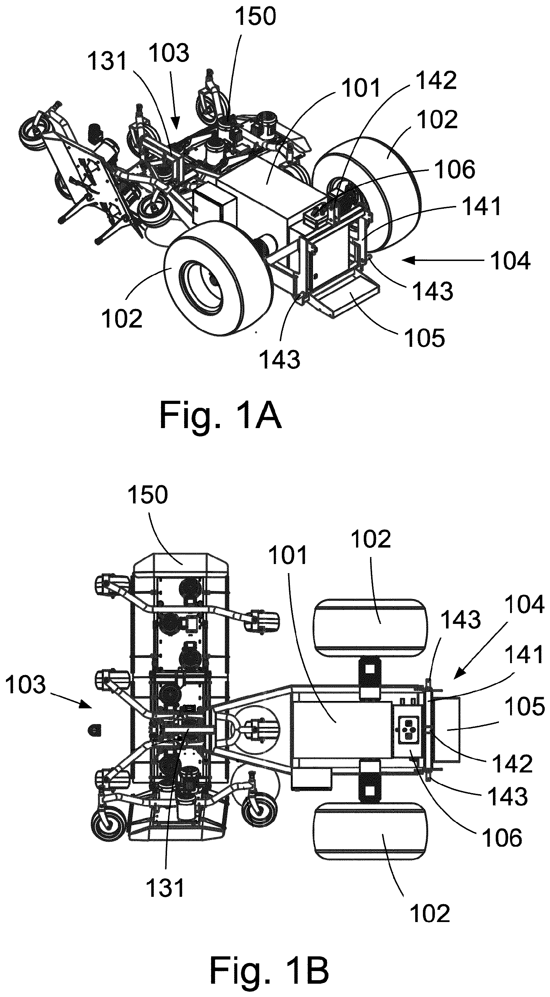

According to the embodiment as shown in Figs. 1A and 1B the implement coupler 103 at the rear side is an implement specific coupling device, in this case for a mowing device 150. It comprises a drawbar 131 which is rigidly connected to the frame 101 of the moving device, and which drawbar 131 comprises a coupling arrangement at its end which is hingedly connected to a matching hatch pin arrangement of the mowing device, such that the mowing device can be lifted by upward movement of the drawbar 131, whereas the mowing device 150 is allowed to rotate around a horizontal hinge axis of the hatching pin which extends perpendicular to the driving direction.

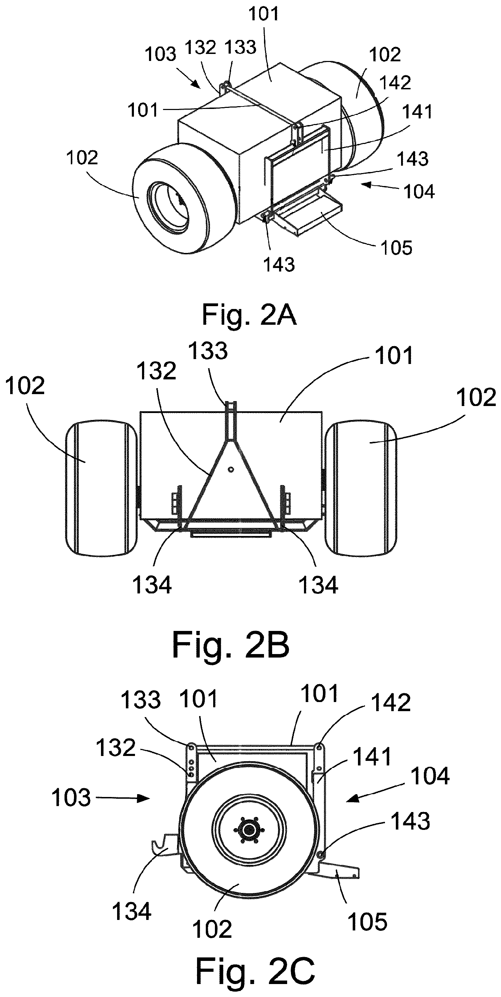

According to the embodiment as shown in Figs. 2A, 2B and 2C the implement coupler 103 at the rear side is a three-point hitch coupler in accordance with any of the international standards ISO 8759, ISO 730 and ISO 11001, such that the moving device can be coupled to standard three-point hitch attachment devices of agricultural implements. Such a hitch coupler may comprise a hitch linkage 132, and for instance a central upper hatch eye 133 and two spaced apart lower hatch hooks 134. The rear side may be provided with a power take-off (PTO) connector for feeding the implement 150, shown in Fig. 2B in the centre of the rear side within the triangle of the linkage 132, seen from the rear.

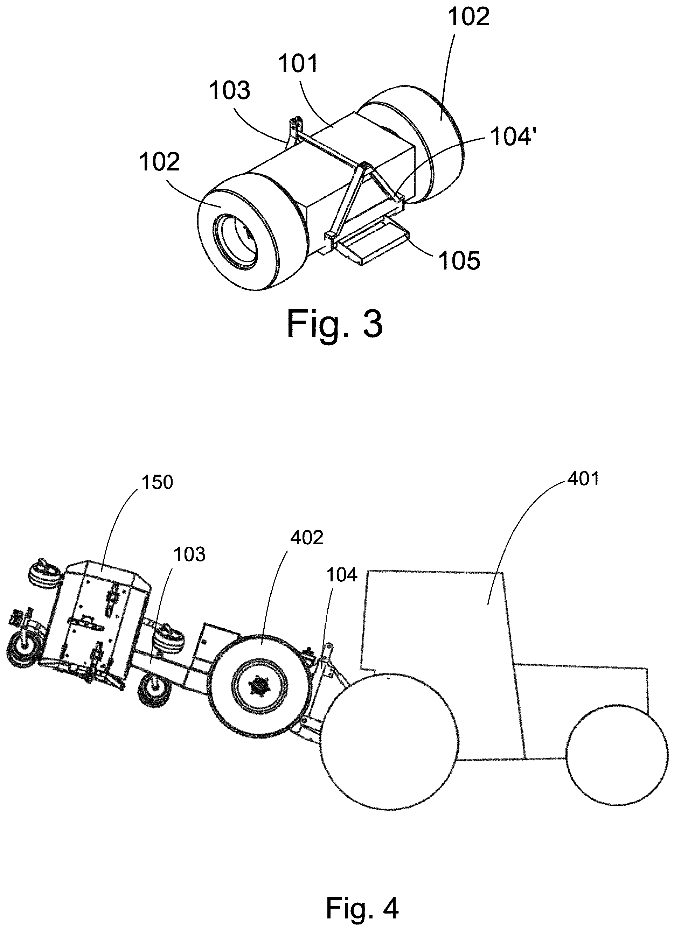

According to figure 3 the three-point hitch attachment device 104 may be provided as a separate adapter device, such as the three-point Accord^{™} A frame linkage triangle 104' as shown in figure 3, or other universal three-point adapter device. The adapter device 104' may be detachably be connected to the mover device, and the mover device may be provided with a suitable coupler for connecting the adapter device 104'.

Figure 4 shows a tractor 401 which is coupled to the mover device 402, which in turn is coupled to a mowing device 150.

The working method may be as follows. The mover device 402 is coupled by an operator to the implement 150. The tractor 401 then is operated to engage the mover device 402 by means of the three-point hitch coupler. The mowing device 150 is folded by means of the hydraulic coupling and the hydraulic conduit of the mover device 402. The tractor then lifts the mover device 402 with the mowing device 150 from the ground, as shown in figure 4. The operator drives the combination to the field to be worked. The mover device 402 with the implement 150 is put down at or near the starting position, the mowing device 150 is unfolded by means of the hydraulic coupling with the tractor, and the mover device 402 is uncoupled from the tractor 401. The tractor 401 is moved out of the way and the operator activates the mover device 402 for automatic mowing of the field. If necessary, the operator can first drive the mover device 402 to a starting position using the manual control unit 106. The tractor 401 can then be used for other tasks, or the operator can drive the tractor 401 home and pick up the mover device 402 with the mowing device 150 once it has finished mowing the field.

## Claims

1. A mover device for autonomously moving an agricultural implement (150) comprising:
a frame (101) having a front side, a rear side, and two lateral sides;
at least one motor;
two coaxial driven wheels (102), wherein each wheel (102) extends at a respective lateral side of the frame (101) and is driven by the motor, for moving the mover device on a surface in a driving direction;
a coupler (103) extending at the rear side of the frame (101) which is arranged for coupling the mover device to the implement (150);
**characterized in that** the weight of the mover device is less than 2000 kg and the mover device comprises:
a three-point hitch attachment device (104) in accordance with any of the international standards ISO 8759, ISO 730 and ISO 11001 extending at the front side of the device for coupling the mover device to a three-point hitch coupler (103) in accordance with any of the international standards ISO 8759, ISO 730 and ISO 11001 of a tractor (401.

2. A mover device for autonomously moving an agricultural implement (150) comprising:
a frame (101) having a front side, a rear side, and two lateral sides;
at least one motor;
two coaxial driven wheels (102), wherein each wheel (102) extends at a respective lateral side of the frame (101) and is driven by the motor, for moving the mover device on a surface in a driving direction;
a coupler (103) extending at the rear side of the frame (101) which is arranged for coupling the mover device to the implement (150);
**characterized in that** the mover device comprises:
a three-point hitch attachment device (104) in accordance with any of the international standards ISO 8759, ISO 730 and ISO 11001 extending at the front side of the device for coupling the mover device to a three-point hitch coupler (103) in accordance with any of the international standards ISO 8759, ISO 730 and ISO 11001 of a tractor (401);
wherein the mover device comprises two motors, wherein each wheel (102) is driven by a respective motor.

3. A mover device for autonomously moving an agricultural implement (150) comprising:
a frame (101) having a front side, a rear side, and two lateral sides;
at least one motor;
two coaxial driven wheels (102), wherein each wheel (102) extends at a respective lateral side of the frame (101) and is driven by the motor, for moving the mover device on a surface in a driving direction;
a coupler (103) extending at the rear side of the frame (101) which is arranged for coupling the mover device to the implement (150);
**characterized in that** the mover device comprises:
a three-point hitch attachment device (104) in accordance with any of the international standards ISO 8759, ISO 730 and ISO 11001 extending at the front side of the device for coupling the mover device to a three-point hitch coupler (103) in accordance with any of the international standards ISO 8759, ISO 730 and ISO 11001 of a tractor (401);
wherein the mover device comprises a footrest (105) and/or a seat at the front side of the mover device, and a manual control unit (106), such that an operator is able to manually drive and steer the mover device.

4. A mover device for autonomously moving an agricultural implement (150) comprising:
a frame (101) having a front side, a rear side, and two lateral sides;
at least one motor;
two coaxial driven wheels (102), wherein each wheel (102) extends at a respective lateral side of the frame (101) and is driven by the motor, for moving the mover device on a surface in a driving direction;
a coupler (103) extending at the rear side of the frame (101) which is arranged for coupling the mover device to the implement (150);
**characterized in that** the mover device comprises:
a three-point hitch attachment device (104) in accordance with any of the international standards ISO 8759, ISO 730 and ISO 11001 extending at the front side of the device for coupling the mover device to a three-point hitch coupler (103) in accordance with any of the international standards ISO 8759, ISO 730 and ISO 11001 of a tractor (401);
wherein the mover device comprises a parking brake for braking the wheels (102) and a sensor for detecting if the mover device is coupled to a tractor (401), wherein an operating unit (106) is arranged such that the parking brake is released if the sensor detects that the moving device is coupled to a tractor (401), and the parking brake is activated if the sensor detects that the moving device is disconnected from a tractor (401).

5. The mover device according to any of the preceding claims, wherein the coupler (103) is arranged for coupling the mover device to the implement (150) in such a manner that mutual rotation around at least a vertical axis between the mover device and the implement (150) is substantially not possible.

6. The mover device according to any of the preceding claims, wherein the coupler (103) is arranged for coupling the mover device to the implement (150) in such a manner that mutual rotation around the vertical axis is possible, and that mutual rotation between the mover device and the implement (150) around a horizontal axis perpendicular to the driving direction is substantially not possible.

7. The mover device according to any of the preceding claims, wherein the coupler (103) extending at the rear side of the frame (101) is a three-point hitch coupler (103) in accordance with any of the international standards ISO 8759, ISO 730 and ISO 11001 for coupling the mover device to a three-point hitch attachment device (104) in accordance with any of the international standards ISO 8759, ISO 730 and ISO 11001 on the implement (150).

8. The mover device according to any of the preceding claims, wherein the mover device comprises a battery or a generator set for powering the motor and/or other electronic devices of the mover device and/or the agricultural implement (150).

9. The mover device according to any of the preceding claims, wherein the operating unit (106) is arranged to autonomously drive and steer the mover device.

10. The mover device according to any of the preceding claims, wherein the mover device comprises sensors connected to the operating unit (106) to detect obstacles and/or to determine the location of the mover device.

11. The mover device according to any of the preceding claims, wherein the mover device comprises at least one hydraulic conduit between the front side and the rear side of the frame (101) with front and rear hydraulic couplings in accordance with the international standard ISO 5675 arranged to transmit hydraulic power from the tractor (401) to the agricultural implement (150) via the conduit.

12. The mover device according to any of the preceding claims, wherein the centre of gravity of the mover device is located between the vertical plane through the axis of the wheels (102) and the rear side of the frame (101).

13. The mover device according to any of the preceding claims, wherein the weight of the mover device is less than 1500 kg.

14. A method for moving an agricultural implement (150), wherein a mover device in accordance with any of the previous claims is coupled to a tractor (401) for transporting the moving device and the moving device is coupled to the agricultural implement (150) for autonomously driving the agricultural implement (150).

15. A method for moving an agricultural implement (150), wherein a mover device is coupled to a tractor (401) for transporting the moving device and the moving device is coupled to the agricultural implement (150) for autonomously driving the agricultural implement (150);
wherein said mover device comprises:
a frame (101) having a front side, a rear side, and two lateral sides;
at least one motor;
two coaxial driven wheels (102), wherein each wheel (102) extends at a respective lateral side of the frame (101) and is driven by the motor, for moving the mover device on a surface in a driving direction;
a coupler (103) extending at the rear side of the frame (101) which is arranged for coupling the mover device to the implement (150);
a three-point hitch attachment device (104) in accordance with any of the international standards ISO 8759, ISO 730 and ISO 11001 extending at the front side of the device for coupling the mover device to a three-point hitch coupler (103) in accordance with any of the international standards ISO 8759, ISO 730 and ISO 11001 of a tractor (401);
wherein the method comprises the following steps:
the mover device is coupled by an operator to the agricultural implement (150),
the tractor (401) then is operated to engage the mover device by means of the three-point hitch attachment device (104);
the tractor (401) lifts the mover device with the agricultural implement (150) from the ground; and
the operator drives the combination of the mover device with the agricultural implement (150) to a field to be worked.

## Patentansprüche

1. Antriebsvorrichtung zum autonomen Bewegen eines landwirtschaftlichen Arbeitsgeräts (150), Folgendes umfassend:
ein Fahrgestell (101) mit einer Vorderseite, einer Rückseite und zwei Längsseiten;
mindestens einen Motor;
zwei koaxiale Antriebsräder (102), wobei sich jedes Rad (102) an einer entsprechenden Längsseite des Fahrgestells (101) erstreckt und von dem Motor angetrieben wird, um die Antriebsvorrichtung in einer Antriebsrichtung auf einer Oberfläche zu bewegen;
eine Kopplungsvorrichtung (103), die sich an der Rückseite des Fahrgestells (101) erstreckt und dafür angeordnet ist, die Antriebsvorrichtung mit dem Arbeitsgerät (150) zu koppeln;
**dadurch gekennzeichnet, dass** das Gewicht der Antriebsvorrichtung weniger als 2000 kg beträgt und die Antriebsvorrichtung Folgendes umfasst:
eine Dreipunktaufhängung-Anbringungsvorrichtung (104) gemäß einer der internationalen Normen ISO 8759, ISO 730 und ISO 11001, die sich an der Vorderseite der Vorrichtung zum Koppeln der Antriebsvorrichtung an eine Dreipunktaufhängungs-Kopplungsvorrichtung (103) gemäß einer der internationalen Normen ISO 8759, ISO 730 und ISO 11001 eines Traktors (401) erstreckt.

2. Antriebsvorrichtung zum autonomen Bewegen eines landwirtschaftlichen Arbeitsgeräts (150), Folgendes umfassend:
ein Fahrgestell (101) mit einer Vorderseite, einer Rückseite und zwei Längsseiten;
mindestens einen Motor;
zwei koaxiale Antriebsräder (102), wobei sich jedes Rad (102) an einer entsprechenden Längsseite des Fahrgestells (101) erstreckt und von dem Motor angetrieben wird, um die Antriebsvorrichtung in einer Antriebsrichtung auf einer Oberfläche zu bewegen;
eine Kopplungsvorrichtung (103), die sich an der Rückseite des Fahrgestells (101) erstreckt und dafür angeordnet ist, die Antriebsvorrichtung mit dem Arbeitsgerät (150) zu koppeln;
**dadurch gekennzeichnet, dass** die Antriebsvorrichtung Folgendes umfasst:
eine Dreipunktaufhängung-Anbringungsvorrichtung (104) gemäß einer der internationalen Normen ISO 8759, ISO 730 und ISO 11001, die sich an der Vorderseite der Vorrichtung zum Koppeln der Antriebsvorrichtung an eine Dreipunktaufhängungs-Kopplungsvorrichtung (103) gemäß einer der internationalen Normen ISO 8759, ISO 730 und ISO 11001 eines Traktors (401) erstreckt;
wobei die Antriebsvorrichtung zwei Motoren umfasst, wobei jedes Rad (102) von einem entsprechenden Motor angetrieben wird.

3. Antriebsvorrichtung zum autonomen Bewegen eines landwirtschaftlichen Arbeitsgeräts (150), Folgendes umfassend:
ein Fahrgestell (101) mit einer Vorderseite, einer Rückseite und zwei Längsseiten;
mindestens einen Motor;
zwei koaxiale Antriebsräder (102), wobei sich jedes Rad (102) an einer entsprechenden Längsseite des Fahrgestells (101) erstreckt und von dem Motor angetrieben wird, um die Antriebsvorrichtung in einer Antriebsrichtung auf einer Oberfläche zu bewegen;
eine Kopplungsvorrichtung (103), die sich an der Rückseite des Fahrgestells (101) erstreckt und dafür angeordnet ist, die Antriebsvorrichtung mit dem Arbeitsgerät (150) zu koppeln;
**dadurch gekennzeichnet, dass** die Antriebsvorrichtung Folgendes umfasst:
eine Dreipunktaufhängung-Anbringungsvorrichtung (104) gemäß einer der internationalen Normen ISO 8759, ISO 730 und ISO 11001, die sich an der Vorderseite der Vorrichtung zum Koppeln der Antriebsvorrichtung an eine Dreipunktaufhängungs-Kopplungsvorrichtung (103) gemäß einer der internationalen Normen ISO 8759, ISO 730 und ISO 11001 eines Traktors (401) erstreckt;
wobei die Antriebsvorrichtung ein Trittbrett (105) und/oder einen Sitz an der Vorderseite der Antriebsvorrichtung und eine Einheit (106) zum manuellen Steuern umfasst, so dass ein Bediener in der Lage ist, die Antriebsvorrichtung manuell zu steuern und zu lenken.

4. Antriebsvorrichtung zum autonomen Bewegen eines landwirtschaftlichen Arbeitsgeräts (150), Folgendes umfassend:
ein Fahrgestell (101) mit einer Vorderseite, einer Rückseite und zwei Längsseiten;
mindestens einen Motor;
zwei koaxiale Antriebsräder (102), wobei sich jedes Rad (102) an einer entsprechenden Längsseite des Fahrgestells (101) erstreckt und von dem Motor angetrieben wird, um die Antriebsvorrichtung in einer Antriebsrichtung auf einer Oberfläche zu bewegen;
eine Kopplungsvorrichtung (103), die sich an der Rückseite des Fahrgestells (101) erstreckt und dafür angeordnet ist, die Antriebsvorrichtung mit dem Arbeitsgerät (150) zu koppeln; **dadurch gekennzeichnet, dass** die Antriebsvorrichtung Folgendes umfasst:
eine Dreipunktaufhängung-Anbringungsvorrichtung (104) gemäß einer der internationalen Normen ISO 8759, ISO 730 und ISO 11001, die sich an der Vorderseite der Vorrichtung zum Koppeln der Antriebsvorrichtung an eine Dreipunktaufhängungs-Kopplungsvorrichtung (103) gemäß einer der internationalen Normen ISO 8759, ISO 730 und ISO 11001 eines Traktors (401) erstreckt;
wobei die Antriebsvorrichtung eine Feststellbremse zum Feststellen der Räder (102) und einen Sensor zum Erkennen, ob die Antriebsvorrichtung an einen Traktor (401) gekoppelt ist, umfasst, wobei eine Bedieneinheit (106) derart angeordnet ist, dass die Feststellbremse gelöst wird, wenn der Sensor erkennt, dass die Antriebsvorrichtung an einen Traktor (401) gekoppelt ist, und die Feststellbremse aktiviert wird, wenn der Sensor erkennt, dass die Antriebsvorrichtung von einem Traktor (401) getrennt ist.

5. Antriebsvorrichtung nach einem der vorhergehenden Ansprüche, wobei die Kopplungsvorrichtung (103) dafür angeordnet ist, die Antriebsvorrichtung derart mit dem Arbeitsgerät (150) zu koppeln, dass eine gegenseitige Drehung um mindestens eine vertikale Achse zwischen der Antriebsvorrichtung und dem Arbeitsgerät (150) im Wesentlichen unmöglich ist.

6. Antriebsvorrichtung nach einem der vorhergehenden Ansprüche, wobei die Kopplungsvorrichtung (103) dafür angeordnet ist, die Antriebsvorrichtung derart mit dem Arbeitsgerät (150) zu koppeln, dass eine gegenseitige Drehung um die vertikale Achse möglich ist, und dass eine gegenseitige Drehung zwischen der Antriebsvorrichtung und dem Arbeitsgerät (150) um eine horizontale Achse rechtwinklig zu der Antriebsrichtung im Wesentlichen unmöglich ist.

7. Antriebsvorrichtung nach einem der vorhergehenden Ansprüche, wobei die Kopplungsvorrichtung (103), die sich an der Rückseite des Fahrgestells (101) erstreckt, eine Dreipunktaufhängung-Kopplungsvorrichtung (103) gemäß einer der internationalen Normen ISO 8759, ISO 730 und ISO 11001 zum Koppeln der Antriebsvorrichtung an eine Dreipunktaufhängung-Anbringungsvorrichtung (104) gemäß einer der internationalen Normen ISO 8759, ISO 730 und ISO 11001 an dem Arbeitsgerät (150) ist.

8. Antriebsvorrichtung nach einem der vorhergehenden Ansprüche, wobei die Antriebsvorrichtung einen Batterie- oder einen Generatorsatz zur Energieversorgung des Motors und/oder weiterer elektronischer Vorrichtungen der Antriebsvorrichtung und/oder des landwirtschaftlichen Arbeitsgeräts (150) umfasst.

9. Antriebsvorrichtung nach einem der vorhergehenden Ansprüche, wobei die Bedieneinheit (106) dafür angeordnet ist, die Antriebsvorrichtung autonom zu steuern und zu lenken.

10. Antriebsvorrichtung nach einem der vorhergehenden Ansprüche, wobei die Antriebsvorrichtung Sensoren umfasst, die mit der Bedieneinheit (106) verbunden sind, um Hindernisse zu erkennen und/oder den Standort der Antriebsvorrichtung zu bestimmen.

11. Antriebsvorrichtung nach einem der vorhergehenden Ansprüche, wobei die Antriebsvorrichtung mindestens einen Hydraulikkreis zwischen der Vorderseite und der Rückseite des Fahrgestells (101) mit vorderer und hinterer Hydraulikkupplung gemäß der internationalen Norm ISO 5675 umfasst, der dafür angeordnet ist, hydraulische Energie von dem Traktor (401) über den Kreis zum landwirtschaftlichen Arbeitsgerät (150) zu übertragen.

12. Antriebsvorrichtung nach einem der vorhergehenden Ansprüche, wobei sich der Masseschwerpunkt der Antriebsvorrichtung zwischen der vertikalen Ebene durch die Achse der Räder (102) und der Rückseite des Fahrgestells (101) befindet.

13. Antriebsvorrichtung nach einem der vorhergehenden Ansprüche, wobei das Gewicht der Antriebsvorrichtung weniger als 1500 kg beträgt.

14. Verfahren zum Bewegen eines landwirtschaftlichen Arbeitsgeräts (150), wobei eine Antriebsvorrichtung nach einem der vorhergehenden Ansprüche an einen Traktor (401) gekoppelt wird, um die Antriebsvorrichtung zu transportieren, und die Antriebsvorrichtung mit dem landwirtschaftlichen Arbeitsgerät (150) gekoppelt wird, um das landwirtschaftliche Arbeitsgerät (150) autonom zu steuern.

15. Verfahren zum Bewegen eines landwirtschaftlichen Arbeitsgeräts (150), wobei eine Antriebsvorrichtung an einen Traktor (401) gekoppelt wird, um die Antriebsvorrichtung zu transportieren, und die Antriebsvorrichtung mit dem landwirtschaftlichen Arbeitsgerät (150) gekoppelt wird, um das landwirtschaftliche Arbeitsgerät (150) autonom zu steuern;
wobei die Antriebsvorrichtung Folgendes umfasst:
ein Fahrgestell (101) mit einer Vorderseite, einer Rückseite und zwei Längsseiten;
mindestens einen Motor;
zwei koaxiale Antriebsräder (102), wobei sich jedes Rad (102) an einer entsprechenden Längsseite des Fahrgestells (101) erstreckt und von dem Motor angetrieben wird, um die Antriebsvorrichtung in einer Antriebsrichtung auf einer Oberfläche zu bewegen;
eine Kopplungsvorrichtung (103), die sich an der Rückseite des Fahrgestells (101) erstreckt und dafür angeordnet ist, die Antriebsvorrichtung mit dem Arbeitsgerät (150) zu koppeln;
eine Dreipunktaufhängung-Anbringungsvorrichtung (104) gemäß einer der internationalen Normen ISO 8759, ISO 730 und ISO 11001, die sich an der Vorderseite der Vorrichtung zum Koppeln der Antriebsvorrichtung an eine Dreipunktaufhängungs-Kopplungsvorrichtung (103) gemäß einer der internationalen Normen ISO 8759, ISO 730 und ISO 11001 eines Traktors (401) erstreckt;
wobei das Verfahren die folgenden Schritte umfasst:
die Antriebsvorrichtung wird durch einen Bediener an das landwirtschaftliche Arbeitsgerät (150) gekoppelt,
der Traktor (401) wird dann betrieben, um die Antriebsvorrichtung mittels der Dreipunktaufhängung-Anbringungsvorrichtung (104) in Eingriff zu nehmen;
der Traktor (401) hebt die Antriebsvorrichtung mit dem landwirtschaftlichen Arbeitsgerät (150) vom Boden ab und der Bediener steuert die Kombination aus der Antriebsvorrichtung und dem landwirtschaftlichen Arbeitsgerät (150) zu einem zu bearbeitenden Feld.

## Revendications

1. Dispositif de déplacement pour déplacer de manière autonome un outil agricole (150) comprenant :
un cadre (101) ayant un côté avant, un côté arrière, et deux côtés latéraux ;
au moins un moteur ;
deux roues entraînées coaxiales (102), dans lequel chaque roue (102) s'étend au niveau d'un côté latéral respectif du cadre (101) et est entraînée par le moteur, pour déplacer le dispositif de déplacement sur une surface dans une direction d'entraînement ;
un coupleur (103) s'étendant au niveau du côté arrière du cadre (101) qui est agencé pour coupler le dispositif de déplacement à l'outil (150) ;
**caractérisé en ce que** le poids du dispositif de déplacement est inférieur à 2 000 kg et le dispositif de déplacement comprend :
un dispositif d'attache d'attelage à trois points (104) conformément à l'une quelconque des normes internationales ISO 8759, ISO 730 et ISO 11001 s'étendant au niveau du côté avant du dispositif pour coupler le dispositif de déplacement à un coupleur d'attelage à trois points (103) conformément à l'une quelconque des normes internationales ISO 8759, ISO 730 et ISO 11001 d'un tracteur (401).

2. Dispositif de déplacement pour déplacer de manière autonome un outil agricole (150) comprenant :
un cadre (101) ayant un côté avant, un côté arrière, et deux côtés latéraux ;
au moins un moteur ;
deux roues entraînées coaxiales (102), dans lequel chaque roue (102) s'étend au niveau d'un côté latéral respectif du cadre (101) et est entraînée par le moteur, pour déplacer le dispositif de déplacement sur une surface dans une direction d'entraînement ;
un coupleur (103) s'étendant au niveau du côté arrière du cadre (101) qui est agencé pour coupler le dispositif de déplacement à l'outil (150) ;
**caractérisé en ce que** le dispositif de déplacement comprend :
un dispositif d'attache d'attelage à trois points (104) selon l'une quelconque des normes internationales ISO 8759, ISO 730 et ISO 11001 s'étendant au niveau du côté avant du dispositif pour coupler le dispositif de déplacement à un coupleur d'attelage à trois points (103) selon l'une quelconque des normes internationales ISO 8759, ISO 730 et ISO 11001 d'un tracteur (401) ;
dans lequel le dispositif de déplacement comprend deux moteurs, dans lequel chaque roue (102) est entraînée par un moteur respectif.

3. Dispositif de déplacement pour déplacer de manière autonome un outil agricole (150) comprenant :
un cadre (101) ayant un côté avant, un côté arrière, et deux côtés latéraux ;
au moins un moteur ;
deux roues entraînées coaxiales (102), dans lequel chaque roue (102) s'étend au niveau d'un côté latéral respectif du cadre (101) et est entraînée par le moteur, pour déplacer le dispositif de déplacement sur une surface dans une direction d'entraînement ;
un coupleur (103) s'étendant au niveau du côté arrière du cadre (101) qui est agencé pour coupler le dispositif de déplacement à l'outil (150) ;
**caractérisé en ce que** le dispositif de déplacement comprend :
un dispositif d'attache d'attelage à trois points (104) conformément à l'une quelconque des normes internationales ISO 8759, ISO 730 et ISO 11001 s'étendant au niveau du côté avant du dispositif pour coupler le dispositif de déplacement à un coupleur d'attelage à trois points (103) conformément à l'une quelconque des normes internationales ISO 8759, ISO 730 et ISO 11001 d'un tracteur (401) ;
dans lequel le dispositif de déplacement comprend un repose-pieds (105) et/ou un siège au niveau du côté avant du dispositif de déplacement, et une unité de commande manuelle (106), de telle sorte qu'un opérateur peut conduire et diriger manuellement le dispositif de déplacement.

4. Dispositif de déplacement pour déplacer de manière autonome un outil agricole (150) comprenant :
un cadre (101) ayant un côté avant, un côté arrière, et deux côtés latéraux ;
au moins un moteur ;
deux roues entraînées coaxiales (102), dans lequel chaque roue (102) s'étend au niveau d'un côté latéral respectif du cadre (101) et est entraînée par le moteur, pour déplacer le dispositif de déplacement sur une surface dans une direction d'entraînement ;
un coupleur (103) s'étendant au niveau du côté arrière du cadre (101) qui est agencé pour coupler le dispositif de déplacement à l'outil (150) ; **caractérisé en ce que** le dispositif de déplacement comprend :
un dispositif d'attache d'attelage à trois points (104) conformément à l'une quelconque des normes internationales ISO 8759, ISO 730 et ISO 11001 s'étendant au niveau du côté avant du dispositif pour coupler le dispositif de déplacement à un coupleur d'attelage à trois points (103) conformément à l'une quelconque des normes internationales ISO 8759, ISO 730 et ISO 11001 d'un tracteur (401) ;
dans lequel le dispositif de déplacement comprend un frein de stationnement pour freiner les roues (102) et un capteur pour détecter si le dispositif de déplacement est couplé à un tracteur (401), dans lequel une unité d'actionnement (106) est agencée de telle sorte que le frein de stationnement est libéré si le capteur détecte que le dispositif de déplacement est couplé à un tracteur (401), et le frein de stationnement est activé si le capteur détecte que le dispositif de déplacement est déconnecté d'un tracteur (401).

5. Dispositif de déplacement selon l'une quelconque des revendications précédentes, dans lequel le coupleur (103) est agencé pour coupler le dispositif de déplacement à l'outil (150) de manière qu'une rotation mutuelle autour d'au moins un axe vertical entre le dispositif de déplacement et l'outil (150) n'est substantiellement pas possible.

6. Dispositif de déplacement selon l'une quelconque des revendications précédentes, dans lequel le coupleur (103) est agencé pour coupler le dispositif de déplacement à l'outil (150) de manière qu'une rotation mutuelle autour de l'axe vertical est possible, et qu'une rotation mutuelle entre le dispositif de déplacement et l'outil (150) autour d'un axe horizontal perpendiculaire à la direction d'entraînement n'est substantiellement pas possible.

7. Dispositif de déplacement selon l'une quelconque des revendications précédentes, dans lequel le coupleur (103) s'étendant au niveau du côté arrière du cadre (101) est un coupleur d'attelage à trois points (103) conformément à l'une quelconque des normes internationales ISO 8759, ISO 730 et ISO 11001 pour coupler le dispositif de déplacement à un dispositif d'attache d'attelage à trois points (104) conformément à l'une quelconque des normes internationales ISO 8759, ISO 730 et ISO 11001 sur l'outil (150).

8. Dispositif de déplacement selon l'une quelconque des revendications précédentes, dans lequel le dispositif de déplacement comprend une batterie ou un ensemble générateur pour alimenter le moteur et/ou d'autres dispositifs électroniques du dispositif de déplacement et/ou de l'outil agricole (150).

9. Dispositif de déplacement selon l'une quelconque des revendications précédentes, dans lequel l'unité d'actionnement (106) est agencée pour entraîner et diriger de manière autonome le dispositif de déplacement.

10. Dispositif de déplacement selon l'une quelconque des revendications précédentes, dans lequel le dispositif de déplacement comprend des capteurs connectés à l'unité d'actionnement (106) pour détecter des obstacles et/ou pour déterminer la localisation du dispositif de déplacement.

11. Dispositif de déplacement selon l'une quelconque des revendications précédentes, dans lequel le dispositif de déplacement comprend au moins un conduit hydraulique entre le côté avant et le côté arrière du cadre (101) avec des coupleurs hydrauliques avant et arrière conformément à la norme internationale ISO 5675 agencés pour transmettre de l'énergie hydraulique du tracteur (401) à l'outil agricole (150) par l'intermédiaire du conduit.

12. Dispositif de déplacement selon l'une quelconque des revendications précédentes, dans lequel le centre de gravité du dispositif de déplacement est situé entre le plan vertical à travers l'axe des roues (102) et le côté arrière du cadre (101).

13. Dispositif de déplacement selon l'une quelconque des revendications précédentes, dans lequel le poids du dispositif de déplacement est inférieur à 1 500 kg.

14. Procédé de déplacement d'un outil agricole (150), dans lequel un dispositif de déplacement selon l'une quelconque des revendications précédentes est couplé à un tracteur (401) pour transporter le dispositif de déplacement et le dispositif de déplacement est couplé à l'outil agricole (150) pour entraîner de manière autonome l'outil agricole (150).

15. Procédé de déplacement d'un outil agricole (150), dans lequel un dispositif de déplacement est couplé à un tracteur (401) pour transporter le dispositif de déplacement et le dispositif de déplacement est couplé à l'outil agricole (150) pour entraîner de manière autonome l'outil agricole (150) ;
dans lequel ledit dispositif de déplacement comprend :
un cadre (101) ayant un côté avant, un côté arrière, et deux côtés latéraux ;
au moins un moteur ;
deux roues entraînées coaxiales (102), dans lequel chaque roue (102) s'étend au niveau d'un côté latéral respectif du cadre (101) et est entraînée par le moteur, pour déplacer le dispositif de déplacement sur une surface dans une direction d'entraînement ;
un coupleur (103) s'étendant au niveau du côté arrière du cadre (101) qui est agencé pour coupler le dispositif de déplacement à l'outil (150) ;
un dispositif d'attache d'attelage à trois points (104) conformément à l'une quelconque des normes internationales ISO 8759, ISO 730 et ISO 11001 s'étendant au niveau du côté avant du dispositif pour coupler le dispositif de déplacement à un coupleur d'attelage à trois points (103) conformément à l'une quelconque des normes internationales ISO 8759, ISO 730 et ISO 11001 d'un tracteur (401) ;
le procédé comprenant les étapes suivantes :
le dispositif de déplacement est couplé par un opérateur à l'outil agricole (150),
le tracteur (401) est ensuite actionné pour se mettre en prise avec le dispositif de déplacement au moyen du dispositif d'attache d'attelage à trois points (104) ;
le tracteur (401) soulève du sol le dispositif de déplacement avec l'outil agricole (150) ; et
l'opérateur conduit la combinaison du dispositif de déplacement avec l'outil agricole (150) jusqu'à un champ à travailler.
